(19) Europäisches Patentamt
European Patent Office
Office européen des brevets

(11) **EP 1 834 849 B1**

(12) **EUROPÄISCHE PATENTSCHRIFT**

(45) Veröffentlichungstag und Bekanntmachung des Hinweises auf die Patenterteilung:
**05.08.2009 Patentblatt 2009/32**

(51) Int Cl.:
*B60R 21/34* (2006.01)    *G06K 9/00* (2006.01)
*G06T 7/20* (2006.01)    *B60R 21/013* (2006.01)

(21) Anmeldenummer: **07102022.6**

(22) Anmeldetag: **09.02.2007**

(54) **Verfahren zur Ermittlung von Objektparametern eines Fußgängers**

Method for determining a pedestrian's object parameters

Procédé de détermination de paramètres d'objet d'un piéton

(84) Benannte Vertragsstaaten:
**DE FR GB IT**

(30) Priorität: **14.03.2006 DE 102006012011**
**09.10.2006 DE 102006047629**

(43) Veröffentlichungstag der Anmeldung:
**19.09.2007 Patentblatt 2007/38**

(73) Patentinhaber: **ROBERT BOSCH GMBH**
**70442 Stuttgart (DE)**

(72) Erfinder:
• **Schick, Jens**
**71083 Herrenberg (DE)**
• **Wuerz-Wessel, Alexander**
**70599 Stuttgart (DE)**
• **Heger, Thomas**
**66957 Vinningen (DE)**

(56) Entgegenhaltungen:
EP-A- 1 705 078          EP-A1- 1 500 562
US-A1- 2003 138 133      US-A1- 2003 234 519

• **ARNELL F ET AL: "Fast object segmentation from a moving camera" INTELLIGENT VEHICLES SYMPOSIUM, 2005. PROCEEDINGS. IEEE LAS VEGAS, NV, USA JUNE 6-8, 2005, PISCATAWAY, NJ, USA,IEEE, 6. Juni 2005 (2005-06-06), Seiten 136-141, XP010833957 ISBN: 0-7803-8961-1**

EP 1 834 849 B1

**EP 1 834 849 B1**

**Beschreibung**

Stand der Technik

Die Erfindung betrifft ein Verfahren und eine Vorrichtung zur Ermittlung von Objektparametern eines Fußgängers, insbesondere für eine Fußgängerschutzeinrichtung eines Kraftfahrzeuges, sowie eine Computerprogramm.

Aus der deutschen Offenlegungsschrift DE 10 2004 006 196 A1 ist eine Schutzeinrichtung für Fußgänger bekannt, wobei mittels einer vorausschauenden Sensorik, beispielsweise einer Stereokamera, die Körpergröße und die Relativgeschwindigkeit eines Fußgängers bestimmt wird.

Aus einer Veröffentlichung des Intelligent Vehicles Symposium, 2005 des IEEE in Las Vegas, Nevada, USA vom 06. bis 08.06.2005 mit den Autoren Frederick Arnell und Lars Petersen unter dem Titel "Fast object segmentation from a moving camera" mit der ISBN-Nr.: 0-7803-8961-1 wird ein Segmentierungsalgorithmus beschrieben, der den optischen Fluss mehrerer Kamerabilder auswertet. Es wird ausgeführt, auf welche Weise eine schnelle Segmentierung und damit auch Objekterkennung, wie z.B. von Fußgängern, durchgeführt werden kann.

Offenbarung der Erfindung

Vorteile der Erfindung

Das nachfolgend beschriebene Verfahren zur Ermittlung von Objektparametern hat den Vorteil, dass indem die Objektparameter des Fußgängers mit einer Mono-Videokamera ermittelbar sind, das Verfahren mit kostengünstiger Hardwareausstattung und häufig unter Verwendung einer bereits im Kraftfahrzeug vorhandenen Videokamera einsetzbar ist. Damit trägt das Verfahren in besonders vorteilhafter Weise zur Verbesserung von Fußgängerschutzverfahren in Kraftfahrzeugen bei. In besonders vorteilhafter Weise trägt das Verfahren zur Verbesserung des Schutzes von Fußgängern bei Kopf-Aufprall auf die Motorhaube des Kraftfahrzeuges bei. Vorteilhaft ist dabei, dass das Verfahren zur Wahrung der strukturellen Integrität der Karosse im Falle einer Kollision mit massiven Objekten, wie Kraftfahrzeugen und Bäumen, beiträgt, da durch die zuverlässige Ermittlung der Objektparameter des Fußgängers den Fußgängerschutzverfahren eine Unterscheidung zwischen Fußgängern und anderen Objekten ermöglicht wird.

Vorteilhaft ist, dass als Objektparameter eine Höhe des Fußgängers und/oder eine Breite des Fußgängers ermittelt wird, da diese beiden Objektparameter eine zuverlässige Klassifizierung als Fußgänger oder auch als andere massive Objekte, wie Bäume, ermöglichen. Der Objektparameter der Höhe des Fußgängers ist überdies für die Berechnung des Auftreffpunktes des Körpers des Fußgängers bzw. des Kopfes des Fußgängers auf der Motorhaube und damit für eine gezielte Aktivierung der Schutzmittel des Kraftfahrzeuges wichtig. Ferner hat die Ermittlung der Objektparameter Höhe und/oder Breite des Fußgängers den Vorteil, dass hieraus ein Maß für das Gewicht des Fußgängers ermittelbar ist und damit die Schutzmittel des Kraftfahrzeuges angepasst an das Gewicht des Fußgängers aktiviert werden können.

Besonders vorteilhaft ist, dass aus dem Verhältnis der Höhe des Fußgängers und der Breite des Fußgängers ein Formfaktor ermittelt wird, da der. Formfaktor als konstanter Faktor unabhängig von der Entfernung des Fußgängers vom Kraftfahrzeug ist.

Vorteilhaft ist ferner, dass die Objektparameter des Fußgängers und/oder der Formfaktor vor einem Aufprall des Fußgängers auf das Kraftfahrzeug wiederholt ermittelt werden, da durch das Verfolgen eines einmal erkannten Fußgängers zeitlich weit vor einem möglichen Aufprall zum einen mehr Daten des Fußgängers ermittelbar sind, da er beispielsweise vollständig im Bild dargestellt wird, und zum anderen die ermittelten Objektparameter und/oder der Formparameter durch Mittelwertbildung zuverlässig ermittelbar sind.

Die Ermittlung der Objektparameter des Fußgängers beim Zeitpunkt des Aufpralls des Fußgängers auf das Kraftfahrzeug hat den Vorteil, dass die Entfernung des Fußgängers von der Videokamera zu genau diesem Zeitpunkt exakt bekannt ist, da die Entfernung eines Kontaktsensors zur Videokamera bekannt ist. Dies ermöglicht es, dass mittels einer Mono-Videokamera eine exakte Bestimmung der Objektparameter Höhe und Breite des Fußgängers durchführbar ist.

Vorteilhaft ist, dass die von der Videokamera erzeugten Bilder mittels des optischen Flusses segmentiert werden, da dies zu einer besonders genauen Ermittlung der Objektparameter des Fußgängers beiträgt.

Besonders vorteilhaft ist, dass die Objektparameter des Fußgängers in Abhängigkeit des Formfaktors ermittelt werden, falls zum Zeitpunkt des Aufpralls des Fußgängers auf das Kraftfahrzeug ein Teil des Fußgängers außerhalb, insbesondere oberhalb, des Bildes ist, da durch diesen Verfahrensschritt sichergestellt ist, dass selbst dann, wenn zum Zeitpunkt des Aufpralls des Fußgängers auf das Kraftfahrzeug nicht der gesamt Fußgänger auf von der Videokamera erzeugten Bild erscheint, die Bestimmung der Objektparameter weiterhin zuverlässig durchführbar ist.

Die vorstehend beschriebenen Vorteile des Verfahrens zur Ermittlung von Objektparametern eines Fußgängers gelten in gleicher Weise für die nachfolgend beschriebene Vorrichtung und das Computerprogramm.

Weitere Vorteile ergeben sich aus der nachfolgenden Beschreibung von Ausführungsbeispielen mit Bezug auf die Figuren und aus den abhängigen Ansprüchen.

Zeichnung

Die Erfindung wird nachstehend anhand der in der Zeichnung dargestellten Ausführungsform näher erläutert.

Es zeigen:

- Figur 1 ein Blockschaltbild der erfindungsgemäßen Vorrichtung,
- Figur 2 ein Flussdiagramm,
- Figur 3 ein erstes Fußgängerschutzszenario,
- Figur 4 ein zweites Fußgängerschutzszenario,
- Figur 5 ein Bild der Videokamera, und
- Figur 6 ein Schaubild.

Beschreibung von Ausführungsbeispielen

Nachfolgend werden ein Verfahren und eine Vorrichtung zur Ermittlung von Objektparametern eines Fußgängers beschrieben, wobei eine am Kraftfahrzeug befindliche Videokamera Bilder von der Umgebung des Kraftfahrzeuges erzeugt und in Abhängigkeit von einem aus den Bildern erzeugten optischen Flusses die Objektparameter des Fußgängers ermittelt werden. Bevorzugt ist das Verfahren und die Vorrichtung Bestandteil eines Fußgängerschutzverfahren bzw. einer Fußgängerschutzvorrichtung eines Kraftfahrzeuges, indem in Abhängigkeit der ermittelten Objektparameter des Fußgängers am Kraftfahrzeug angebrachte Schutzmittel für Fußgänger angesteuert werden.

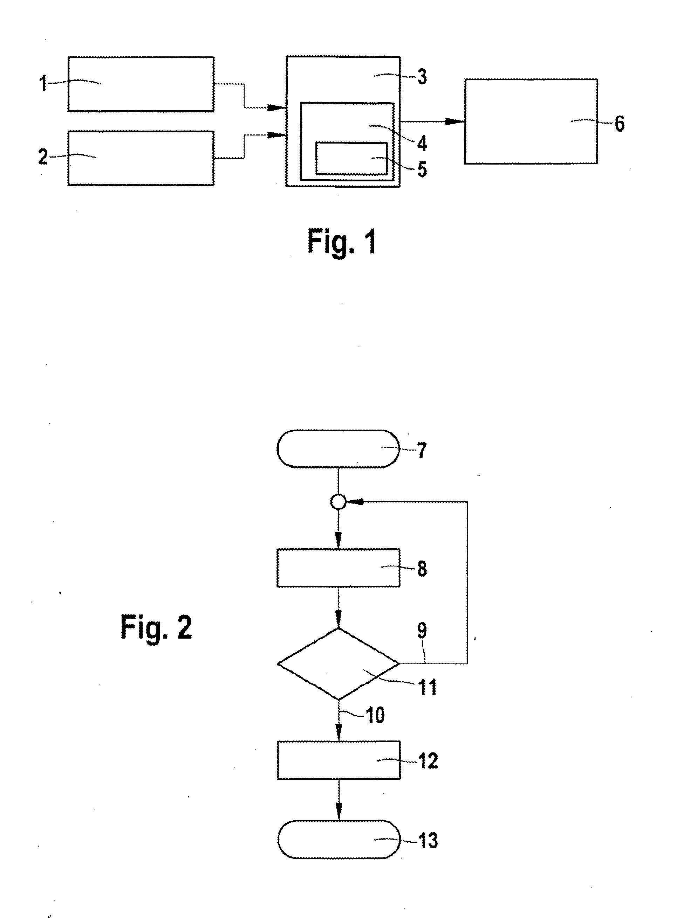

Figur 1 zeigt in einem Blockschaltbild die erfindungsgemäße Vorrichtung umfassend das Steuergerät 3. Eine Videokamera 1 ist an einen ersten Dateneingang eines Steuergeräts 3 zur Ansteuerung von Rückhaltemitteln 6 angeschlossen. An einen zweiten Dateneingang ist ein Kontaktsensor 2 angeschlossen. Das Steuergerät 3 weist einen Prozessor 4 auf, auf dem ein Algorithmus 5 abläuft, um Schutzmittel für Fußgänger anzusteuern. Ferner implementiert der Algorithmus 5 das erfindungsgemäße Verfahren. Eine solche Fußgängerschutzaktuatorik 6 ist daher über einen Datenausgang an das Steuergerät 3 angeschlossen. Bei dem Steuergerät 3 kann es sich hier um das Steuergerät im Fahrzeug handeln, das die gesamten Rückhaltemittel, auch für die Insassen, ansteuert. Es ist jedoch möglich, dass das Steuergerät 3 lediglich zur Ansteuerung der Fußgängerschutzaktuatorik 6 verwendet wird. Für den Fall, dass das Steuergerät 3 auch für die Schutzmittel für die Fahrzeuginsassen verwendet wird, sind hier der Einfachheit halber weitere Sensoren, die mit dem Steuergerät 3 verbunden sind bzw. die entsprechenden Rückhaltemittel, nicht dargestellt. Zu der Fußgängerschutzaktuatorik 6 gehören eine aufstellbare Fronthaube, Außenairbags, beispielsweise an der A-Säule und auch Fahreingriffe oder andere Veränderungen des Fahrzeugs. Im bevorzugten Ausführungsbeispiel ist der Kontaktsensor 2 in der Stoßstange eingebaut und basiert auf Kraftmessung oder Verformungsänderung, beispielsweise als Piezofolie, Dehnmessstreifen, Lichtsensoren oder Sensoren aus Komposit. Alternativ können auch Beschleunigungsmessende Sensoren verwendet werden.

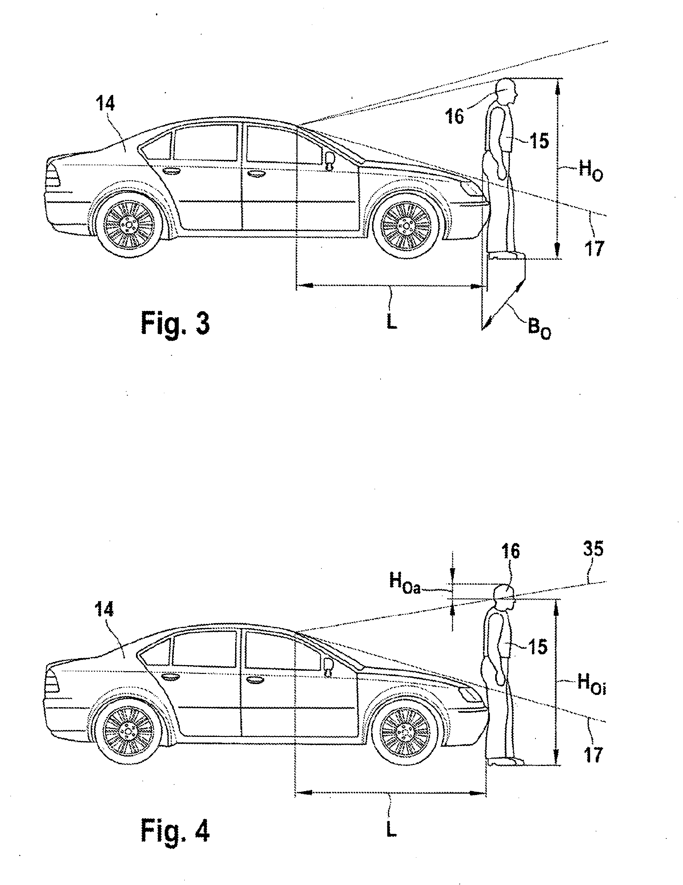

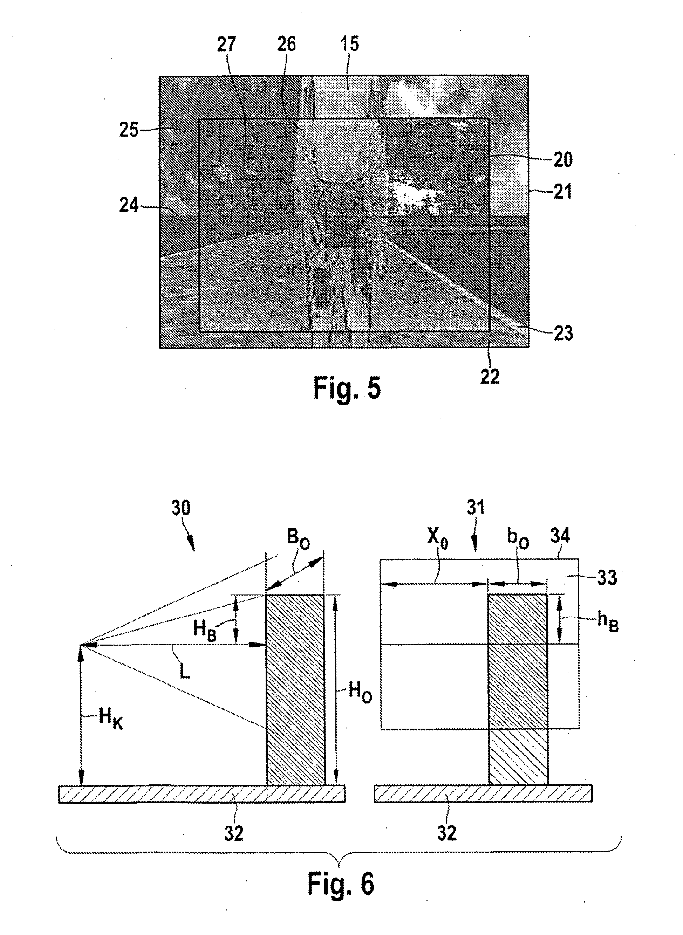

Figur 2 zeigt ein Flussdiagramm der erfindungsgemäßen Vorrichtung. Das Verfahren beginnt mit dem Start 7. Im ersten Verfahrenschritt 8 werden die Bilder der Videokamera verarbeitet, indem aus Bildsequenzen der optische Fluss bestimmt wird. Als optischer Fluss wird ein Vektorfeld verstanden, das die 2-dimensionale-Bewegungsrichtung für jeden Bildpunkt einer Bildsequenz angibt. Figur 5 zeigt beispielhaft ein von der Videokamera aufgenommenes Bild 20 aus einer realen Umgebung 21 des Kraftfahrzeuges 14. Die Umgebung 21 des Kraftfahrzeuges 14 zeigt eine Straße 22 und Seitenrandbegrenzungen 23. Ferner zeigt die Umgebung 21 des Kraftfahrzeuges 14 den Horizont 24 und den Himmel 25. Im Zentrum des Bildes ist ein Teil eines Fußgängers 15 zu erkennen, wobei der Fußgänger 15 kurz vor dem Aufprall mit dem Kraftfahrzeug 14 steht. Der realen Umgebung 21 ist das Bild 20 überlagert. Innerhalb des Bildes 20 wiederum ist der optische Fluss überlagert. Dabei sind Bildpunkte des Bildes 20 mit großem optischem Fluss durch helle Punkte 26 überlagert, während Bildpunkte des Bildes 20 mit kleinem oder keinem optischen Fluss durch dunkle Punkte 27 überlagert sind. Im bevorzugten Ausführungsbeispiel wird der optische Fluss differentiell, also auf der Grundlage von Ableitungen und Gradienten des Grauwertsignals gebildet. In einer Variante des bevorzugten Ausführungsbeispiels wird alternativ oder zusätzlich der Parallaxenfluss berechnet. Der optische Fluss bildet die Grundlage, um im Verfahrensschritt 8 das Bild 20 zu segmentieren und um die Höhe des Fußgängers 15 und/oder die Breite des Fußgängers 15 und/oder den Formfaktor $\varphi$ des Fußgängers 15 zu berechnen. Der Formfaktor $\varphi$ berechnet sich dabei als Quotient der Höhe des Fußgängers 15 zur Breite des Fußgängers 15. Der Formfaktor ist ein konstanter Faktor, da dieser unabhängig von der Entfernung des Fußgängers 15 vom Kraftfahrzeug 14 ist. Im anschließenden Entscheidungsschritt 9 wird geprüft, ob ein Aufprall des Fußgängers 15 auf das Kraftfahrzeug 14 stattgefunden hat. Hierzu wird das Sensorsignal des Kontaktsensors 2 verwendet. Falls dieser noch keinen Aufprall registriert und gemeldet hat, wird über nein 9 zum ersten Verfahrenschritt 8 abgezweigt. Falls der Kontaktsensor 2 jedoch einen Aufprall registriert hat wird über ja 10 zum weiteren Verfahrensschritt 12 verzweigt. Im weiteren Verfahrensschritt 12 wird aus dem Bild zum Zeitpunkt des Unfalls die Höhe des Fußgängers 15 und/oder die Breite des Fußgängers 15 berechnet. Figur 3 zeigt beispielhaft ein erstes Fußgängerschutzszenario bei dem der Kopf 16 des Fußgängers 15 komplett im Bilderfassungsbereich 17 der nicht gezeigten Videokamera 1 liegt. Die Videokamera 1 ist im bevorzugten Ausführungsbeispiel hinter der Windschutzscheibe des Kraftfahrzeuges 14 angeordnet. Die Höhe des Fußgängers 15 ist mit $H_O$ gekennzeichnet, während die Breite des Fußgängers 15 mit $B_O$ gekennzeichnet ist. L bezeichnet den Abstand des Aufprallpunktes des Fußgängers 15 auf das Kraftfahrzeug 14 bis zur Videokamera 1. Ein Objekt wird dann als Fußgänger erkannt, wenn entweder die Höhe des Fußgängers 15 zwischen 0,8 m und 2,2 m und/oder die Breite des Fußgängers 15 zwischen 0,3 m und 0,6 m ist. Das Ergebnis des Verfahrensschritts 12 wird von dem Steuergerät dazu verwendet, um die Fußgängerschutzaktuatorik so zu steuern, dass die Fußgängerschutzmaßnahmen den an den Fußgänger angepassten größtmöglichen Schutz bieten. Das Verfahren ist damit mit dem Ende 13 abgeschlossen.

Figur 6 zeigt ein Schaubild zur Erläuterung der Berechnung der Höhe $H_O$ des Fußgängers 15 und der Breite $B_O$ des Fußgängers 15. Das linke Schaubild 30 zeigt eine Darstellung der realen Anordnung in Weltdimensionen. Dabei bezeichnet $H_K$ die Einbauhöhe der Videokamera 1 gegenüber der Fahrbahn 32. L bezeichnet wie vorstehend ausgeführt den Abstand des Aufprallpunktes des Fußgängers 15 auf das Kraftfahrzeug 14 bis zur Videokamera 1. Ferner wird mit $H_B$ die Höhe des Fußgängers 15 über der horizontalen Verlängerung der Einbauhöhe $H_K$ der Videokamera 1 bezeichnet. Das rechte Schaubild 30 zeigt eine Darstellung im Bildbereich mit einem von der Videokamera 1 aufgenommenen Bild 33. Das Bild 33 der Videokamera 1 ist mit einem Rahmen 34 gekennzeichnet. Der untere Teil der realen Anordnung, insbesondere die Fahrbahn 32 und der untere Teile des Fußgängers 15, ist außerhalb des Rahmens 34 und damit im Bild 33 nicht sichtbar. Dabei bezeichnet $h_B$ die Höhe des Fußgängers 15 über der Bildmitte, $b_O$ die Breite des Fußgängers 15 und $x_O$ die laterale Position des Fußgängers 15 jeweils in Bilddimensionen. Die $H_O$ des Fußgängers 15 wird dabei durch die folgende Formel berechnet, wobei mit f die Brennweite der Videokamera 1 bezeichnet ist:

$$H_O = H_K + \frac{h_B * L}{f} \tag{1}$$

Da zum Zeitpunkt des Aufpralls des Fußgängers 15 auf das Kraftfahrzeug 14, der durch den Kontaktsensor 2 wie vorstehend ausgeführt registriert wird, alle Parameter der Formel (1) bekannt sind, ist die Höhe $H_O$ des Fußgängers 15 ermittelbar und wird entsprechend dem in Figur 2 dargestellten Verfahren ermittelt.

Die Breite $B_O$ des Fußgängers 15 lässt sich unabhängig von einem registrierten Aufprall zu jedem Zeitpunkt gemäß der folgenden Formel (2) ermitteln und wird entsprechend dem in Figur 2 dargestellten Verfahren ermittelt:

$$B_O = \frac{h_O * L}{f} \tag{2}$$

Figur 4 zeigt ein zweites Fußgängerschutzszenario bei dem der Kopf 16 des Fußgängers 15 nicht komplett im Bilderfassungsbereichs 17 Videokamera 1 liegt, sondern bei dem zumindest ein Teil oder der gesamte Kopf 16 nicht durch die Videokamera 1 erfasst wird. Die Figur 4 zeigt die die Position des Fußgängers 15 zum Zeitpunkt des Aufpralls auf das Kraftfahrzeug 14. Da die in Figur 4 dargestellte Situation üblicherweise nicht plötzlich auftritt, sondern im allgemeinen eine Annäherung von Fußgänger 15 und Kraftfahrzeug 14 vorausgeht, werden verfahrengemäß die Breite $B_O$ des Fußgängers 15 und die Höhe $H_O$ des Fußgängers 15 zumindest zu einem Zeitpunkt vor dem Aufprall gemäß den Formeln (1) und (2) berechnet, da zumindest zu einem Zeitpunkt der gesamte Kopf 16 erfasst wird. Daraus wird gemäß der folgenden Formel (3) der Formfaktor φ bestimmt, der für einen im Bild verfolgten Fußgänger 15 zeitlich konstant ist:

$$\varphi = \frac{H_O}{B_O} = \frac{H_{Oi} + H_{Oa}}{B_O} = konst. \tag{3}$$

Dabei ist mit $H_{Oi}$ die Höhe des Fußgängers 15 unterhalb der oberen Erfassungsgrenze 35 des Erfassungsbereiches 17 bezeichnet. $H_{Oa}$ bezeichnet die Strecke von der oberen Erfassungsgrenze 35 bis zum Kopfende des Kopfes 16 des Fußgängers 15. Die Höhe $H_O$ des Fußgängers 15 wird bei diesem Szenario gemäß der Formel (4) berechnet:

$$H_O = \varphi * B_O = \varphi * \frac{f * b_O}{L} \qquad\qquad (4)$$

Damit ist die Berechnung der Höhe des Fußgängers 15 und damit die Berechnung der Position des zu schützenden Kopfes 16 des Fußgängers 15 auch dann gewährleistet, wenn sich zum Zeitpunkt des Aufpralls der Kopf 16 des Fußgängers 15 teilweise oder vollständig außerhalb des Erfassungsbereiches 17 der VIdeokamera 1 befindet.

**Patentansprüche**

1. Verfahren zur Ermittlung von Objektparametern eines Fußgängers (15), insbesondere für ein Fußgängerschutzverfahren eines Kraftfahrzeuges (14), wobei eine am Kraftfahrzeug (14) befindliche Videokamera (1) Bilder von der Umgebung des Kraftfahrzeuges (14) erzeugt, wobei in Abhängigkeit von einem aus den Bildern erzeugten optischen Flusses die Objektparameter des Fußgängers (15) ermittelt werden, **dadurch gekennzeichnet, dass** die Objektparameter des Fußgängers (15) beim Zeitpunkt des Aufpralls des Fußgängers (15) auf das Kraftfahrzeug (14) ermittelt werden.

2. Verfahren nach Anspruch 1, **dadurch gekennzeichnet, dass** als Objektparameter eine Höhe ($H_O$) des Fußgängers (15) und/oder eine Breite ($B_O$) des Fußgängers (15) ermittelt wird.

3. Verfahren nach Anspruch 2, **dadurch gekennzeichnet, dass** aus dem Verhältnis der Höhe ($H_O$) des Fußgängers (15) und der Breite ($B_O$) des Fußgängers (15) ein Formfaktor ermittelt wird.

4. Verfahren nach einem der vorhergehenden Ansprüche, **dadurch gekennzeichnet, dass** die Objektparameter des Fußgängers (15) und/oder der Formfaktor vor einem Aufprall des Fußgängers (15) auf das Kraftfahrzeug (14) wiederholt ermittelt werden.

5. Verfahren nach Anspruch **1**, **dadurch gekennzeichnet, dass** der Zeitpunkt des Aufpralls des Fußgängers (15) auf das Kraftfahrzeug (14) durch einen Kontaktsensor (2) ermittelt wird.

6. Verfahren nach einem der vorhergehenden Ansprüche, **dadurch gekennzeichnet, dass** die Objektparameter des Fußgängers (15) in Abhängigkeit eines mittels des optischen Flusses segmentierten Bildes ermittelt werden.

7. Verfahren nach einem der vorhergehenden Ansprüche, **dadurch gekennzeichnet, dass** die Objektparameter des Fußgängers (15) in Abhängigkeit des Abstandes des Fußgängers (15) von der Videokamera (1), insbesondere zum Zeitpunkt des Aufpralls des Fußgängers (15) auf das Kraftfahrzeug (14), ermittelt werden.

8. Verfahren nach Anspruch 3, **dadurch gekennzeichnet, dass** die Objektparameter des Fußgängers (15) in Abhängigkeit des Formfaktors ermittelt werden, falls zum Zeitpunkt des Aufpralls des Fußgängers (15) auf das Kraftfahrzeug (14) ein Teil des Fußgängers (15) außerhalb, insbesondere oberhalb, des Bildes ist.

9. Vorrichtung zur Ermittlung von Objektparametern eines Fußgängers (15), insbesondere für eine Fußgängerschutzvorrichtung eines Kraftfahrzeuges (14), wobei die Vorrichtung derart ausgebildet ist, dass die Vorrichtung Bilder einer Videokamera (1) verarbeitet, wobei die Vorrichtung derart ausgebildet ist, dass die Vorrichtung in Abhängigkeit von aus den Bildern erzeugten optischen Flusses Objektparameter des Fußgängers (15) ermittelt, **dadurch gekennzeichnet, dass** sie weiterhin derart ausgebildet ist, dass die Objektparameter des Fußgängers (15) beim Zeitpunkt des Aufpralls des Fußgängers (15) auf das Kraftfahrzeug (14) ermittelt werden.

10. Vorrichtung nach Anspruch **9, dadurch gekennzeichnet, dass** die Vorrichtung derart ausgebildet ist und entsprechende Mittel (3) aufweist, dass die Vorrichtung das Verfahren nach einem der vorhergehenden Ansprüche 1 bis **8** durchführt.

11. Computerprogramm mit Programmcode-Mitteln, um alle Schritte von jedem beliebigen der Ansprüche 1 bis **8** durchzuführen, wenn das Programm auf einem Computer ausgeführt wird.

**Claims**

1. Method for determining object parameters of a pedestrian (15), in particular for a pedestrian protection method of a motor vehicle (14), a video camera (1) located on the motor vehicle (14) producing images of the surroundings of the motor vehicle (14), the object parameters of the pedestrian (15) being determined as a function of an optical flow produced from the images, **characterized in that** the object parameters of the pedestrian (15) are determined at the instant of the impact of the pedestrian (15) on the motor vehicle (14).

2. Method according to Claim 1, **characterized in that** a height ($H_o$) of the pedestrian (15) and/or a width ($B_o$) of the pedestrian (15) are/is determined as object parameter(s).

3. Method according to Claim 2, **characterized in that** a form factor is determined from the ratio of the height ($H_o$) of the pedestrian (15) to the width ($B_o$) of the pedestrian (15).

4. Method according to one of the preceding claims, **characterized in that** the object parameters of the pedestrian (15) and/or the form factor are/is repeatedly determined before an impact of the pedestrian (15) on the motor vehicle (14).

5. Method according to Claim 1, **characterized in that** the instant of the impact of the pedestrian (15) on the motor vehicle (14) is determined by a contact sensor (2).

6. Method according to one of the preceding claims, **characterized in that** the object parameters of the pedestrian (15) are determined as a function of an image segmented by means of the optical flow.

7. Method according to one of the preceding claims, **characterized in that** the object parameters of the pedestrian (15) are determined as a function of the spacing of the pedestrian (15) from the video camera (1), in particular at the instant of the impact of the pedestrian (15) on the motor vehicle (14).

8. Method according to Claim 3, **characterized in that** the object parameters of the pedestrian (15) are determined as a function of the form factor if a part of the pedestrian (15) is outside, in particular above, the image at the instant of the impact of the pedestrian (15) on the motor vehicle (14).

9. Device for determining object parameters of a pedestrian (15), in particular for a pedestrian protection device of a motor vehicle (14), with the device being designed in such a way that the device processes images from a video camera (1), the device being designed in such a way that the device determines object parameters of the pedestrian (15) as a function of an optical flow produced from the images, **characterized in that** it is, furthermore, designed in such a way that the object parameters of the pedestrian (15) are determined at the instant of the impact of the pedestrian (15) on the motor vehicle (14).

10. Device according to Claim 9, **characterized in that** the device is designed in such a way that, and has corresponding means (3) in such a way that the device carries out the method according to one of the preceding Claims 1 to 8.

11. Computer program with program code means for carrying out all the steps of any desired one of Claims 1 to 8 when the program is run on a computer.

**Revendications**

1. Procédé de détermination de paramètres d'objet d'un piéton (15), en particulier dans un procédé de protection des piétons exécuté dans un véhicule automobile (14), une caméra vidéo (1) située sur le véhicule automobile (14) formant des images de l'environnement du véhicule automobile (14), les paramètres d'objet du piéton (15) étant déterminés en fonction d'un flux optique formé à partir des images,
**caractérisé en ce que**
les paramètres d'objet du piéton (15) sont déterminés à l'instant de la collision du piéton (15) avec le véhicule (14).

2. Procédé selon la revendication 1, **caractérisé en ce que** comme paramètres d'objet, on détermine la hauteur ($H_o$) du piéton (15) et/ou la largeur ($B_o$) du piéton (15).

**3.** Procédé selon la revendication 2, **caractérisé en ce qu'**un facteur de forme est déterminé à partir du rapport entre la hauteur ($H_o$) du piéton (15) et la largeur ($B_o$) du piéton (15).

**4.** Procédé selon l'une des revendications précédentes, **caractérisé en ce que** les paramètres d'objet du piéton (15) et/ou le facteur de forme sont déterminés de manière répétée avant une collision du piéton (15) avec le véhicule (14).

**5.** Procédé selon la revendication 1, **caractérisé en ce que** l'instant de la collision du piéton (15) avec le véhicule (14) est déterminé à l'aide d'une sonde de contact (2).

**6.** Procédé selon l'une des revendications précédentes, **caractérisé en ce que** les paramètres d'objet du piéton (15) sont déterminés en fonction d'une image segmentée au moyen du flux optique.

**7.** Procédé selon l'une des revendications précédentes, **caractérisé en ce que** les paramètres d'objet du piéton (15) sont déterminés en fonction de la distance entre le piéton (15) et la caméra vidéo (1), en particulier à l'instant de la collision du piéton (15) avec le véhicule (14).

**8.** Procédé selon la revendication 3, **caractérisé en ce qu'**au cas où une partie du piéton (15) est située à l'extérieur de l'image et en particulier au-dessus d'elle à l'instant de la collision du piéton (15) avec le véhicule (14), les paramètres d'objet du piéton (15) sont déterminés en fonction des facteurs de forme.

**9.** Dispositif de détermination de paramètres d'objet d'un piéton (15), en particulier pour un dispositif de protection de piétons prévu dans un véhicule (14), le dispositif étant configuré de telle sorte que le dispositif traite les images d'une caméra vidéo (1), le dispositif étant configuré de telle sorte que le dispositif détermine des paramètres d'objet du piéton (15) en fonction du flux optique formé à partir des images,
**caractérisé en ce que**
le dispositif est en outre configuré de telle sorte que les paramètres d'objet du piéton (15) sont déterminés à l'instant de la collision du piéton (15) avec le véhicule (14).

**10.** Procédé selon la revendication 9, **caractérisé en ce que** le dispositif est configuré de telle sorte que et présente des moyens (3) tels que le dispositif exécute le procédé selon l'une des revendications 1 à 8 qui précèdent.

**11.** Programme informatique doté de moyens de code de programme en vue d'exécuter toutes les étapes selon l'une quelconque des revendications 1 à 8 lorsque le programme est exécuté sur un ordinateur.

**Fig. 1**

**Fig. 2**

Fig. 3

Fig. 4

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• DE 102004006196 A1